# FASCICULE DE BREVET EUROPEEN

(11) **EP 0 764 766 B1**
(45) Date de publication et mention de la délivrance du brevet: **03.11.1999**
(21) Numéro de dépôt: 96401991.3
(22) Date de dépôt: 19.09.1996
(51) Int. Cl.: F01D 5/26

(54) **Agencement amortisseur monté entre des aubes de rotor**
Zwischen Leitschaufeln montierte Einrichtung zum Dämpfen der Schwingungen
Device for suppressing vibrations mounted between rotor blades

(30) Priorité: 21.09.1995 FR 9511079
(43) Date de publication de la demande: 26.03.1997
(73) Titulaire: SOCIETE NATIONALE D'ETUDE ET DE CONSTRUCTION DE MOTEURS D'AVIATION, "S.N.E.C.M.A.", 75015 Paris (FR)
(72) Inventeur: Surdi, Jean Marc, 77950 Rubelles (FR)

(56) Documents cités:
- EP-A- 0 089 272
- GB-A- 2 138 078
- US-A- 5 205 713

## Description

L'invention se rapporte à un agencement amortisseur monté entre des aubes d'un rotor.

Elle a pour but d'amortir les vibrations de battement des aubes en direction tangentielle, c'est-à-dire dans la direction de rotation du disque sur lequel les aubes sont montés. Comme on le verra, on utilise pour cela des éléments mobiles entre les aubes et que les forces centrifuges repoussent, comme dans de nombreuses conceptions antérieures telles que celles qui sont illustrées dans les brevets français 2 352 159 ou, pour une réalisation plus compliquée, dans le brevet américain 4 182 590. Dans ces conceptions, un élément mobile presse simultanément sur les plates-formes de deux aubes voisines qui servent à canaliser les gaz en formant une surface extérieure lisse et continue au pied des aubes ; et ces plates-formes sont inclinées radialement vers l'extérieur depuis la pale de l'aube, c'est-à-dire que les deux plates-formes dessinent, en se rejoignant, une espèce de voûte au-dessus de l'élément mobile. Ce dernier est donc repoussé par les forces centrifuges au milieu de la voûte, à la jonction des deux plates-formes. Les battements des aubes en direction tangentielle font glisser les plates-formes sur les surfaces de l'élément, ce qui produit des frottements amortissant les vibrations.

Cette conception convenable est très employée pour des aubes mobiles de petite taille telles que celles d'un compresseur ou d'une turbine de moteur d'avion, mais elle est moins avantageuse pour les aubes beaucoup plus grandes qu'on rencontre en particulier sur la soufflante et qu'on désire alléger au maximum afin de réduire leur inertie. Une mesure très fréquence consiste alors à supprimer les plates-formes. Les éléments libres d'amortissement perdent alors les surfaces qui les retiennent.

Une autre conception est présentée dans le brevet français 2 669 686. La veine d'écoulement des gaz n'est plus ici délimitée par des plates-formes d'aubes qui se rejoignent en voûte, mais par des pièces appelées sabots qui sont montées sur le disque de rotor et comprennent à l'extérieur une plate-forme qui comble l'intervalle entre deux pales d'aubes voisines. On trouve des éléments d'amortissement sous ces plates-formes, et ces éléments sont composés d'une paire de masselottes situées contre la face latérale d'une échasse d'aube respective et d'une entretoise en arceau constituant un ressort reliant les masselottes. Comme l'arceau touche à la plate-forme à son sommet, les forces centrifuges provoquent son ouverture en déplaçant radialement les masselottes, et cette ouverture contribue à écarter les masselottes d'un mouvement tangentiel et à les presser sur les échasses des aubes. Cependant, cette composante tangentielle des déplacements est faible, ce qui a pour conséquence que la force de pression entre les masselottes et les aubes est peu importante et que les vibrations de battement des aubes sont mal contenues.

L'invention repose sur une conception plus efficace pour amortir les vibrations de battement des aubes par des masselottes pressées contre leurs échasses par la force centrifuge ; les masselottes sont retenues plus avantageusement que par un ressort qui les réunit par paires.

Elles sont disposées chacune dans un logement d'un réceptacle solidaire du disque de rotor. Les logements s'ouvrent vers les faces latérales des aubes et sont délimités radialement vers l'extérieur par des portions de réceptacle qui présentent une inclinaison radiale vers l'extérieur en direction de l'ouverture des logements.

Les masselottes glissent donc contre ces portions sous l'effet des forces centrifuges et sont repoussées hors des logements jusqu'à ce qu'elles touchent les aubes. Elles sont appliquées avec une force qui dépend de la force centrifuge mais aussi de l'inclinaison des portions de réceptacle et qui peut être assez élevée. Les vibrations des aubes, qui doivent vaincre cette force de pression et une force également importante de frottement entre la surface extérieure des masselottes et les portions extérieures des réceptacles, sont donc fortement amorties.

Ces détails et caractéristiques de l'invention, ainsi que d'autres, apparaîtront plus clairement au commentaire des dessins suivants qui illustrent une réalisation non limitative de l'invention :
- la figure 1 représente une situation d'emploi de l'agencement amortisseur de l'invention, et
- la figure 2 représente des coupes de cet agencement, respectivement selon la ligne II-II de la figure 3 et la ligne III-III de la figure 2.

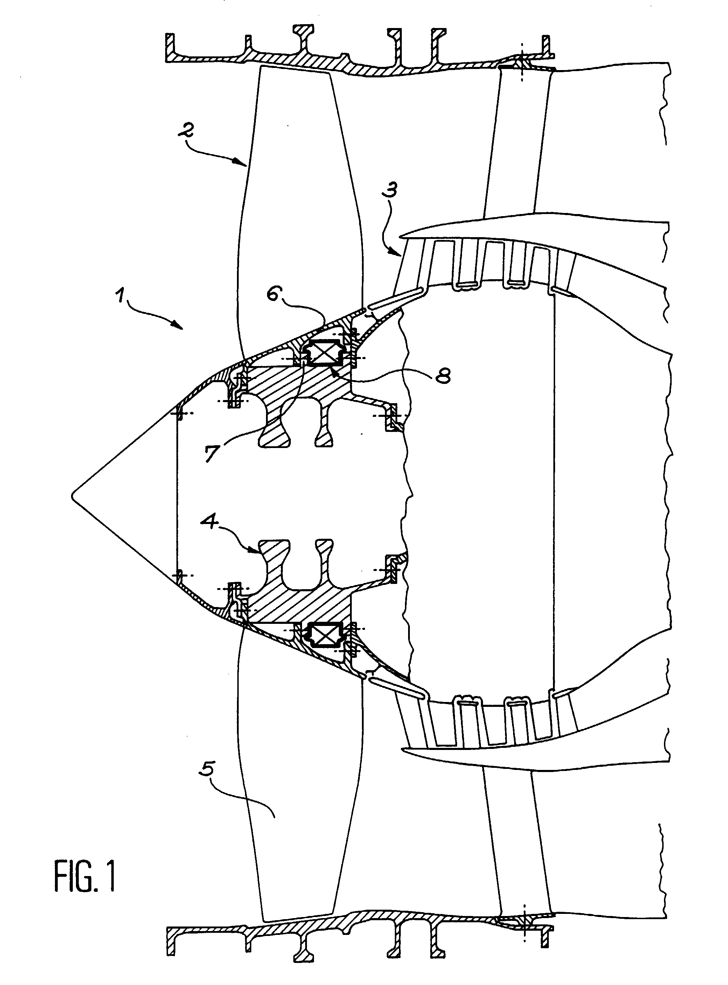

On a représenté l'avant d'un turboréacteur à la figure 1, et l'on reconnaît en particulier la soufflante 1 à l'entrée de la veine d'écoulement des gaz 2, devant le compresseur à basse pression 3. La soufflante 1 est composée essentiellement d'un disque 4 de rotor, d'aubes 5 de soufflante dont les pieds sont insérés dans des brochages du disque 4 et de plates-formes 6 intermédiaires, boulonnées à des brides 7 du disque 4 et qui maintiennent les aubes 5 à leur position angulaire. Les plates-formes intermédiaires 6 forment, comme les sabots du denrier brevet cité, une couronne délimitant la veine d'écoulement des gaz 2.

S'ajoutent à ces pièces les agencements amortisseurs 8 selon l'invention, qui s'étendent radialement entre les plates-formes 6 et le disque 4 de rotor, et tangentiellement entre les aubes 5 voisines. Un agencement amortisseur 8 se trouve entre chaque paire d'aubes 5.

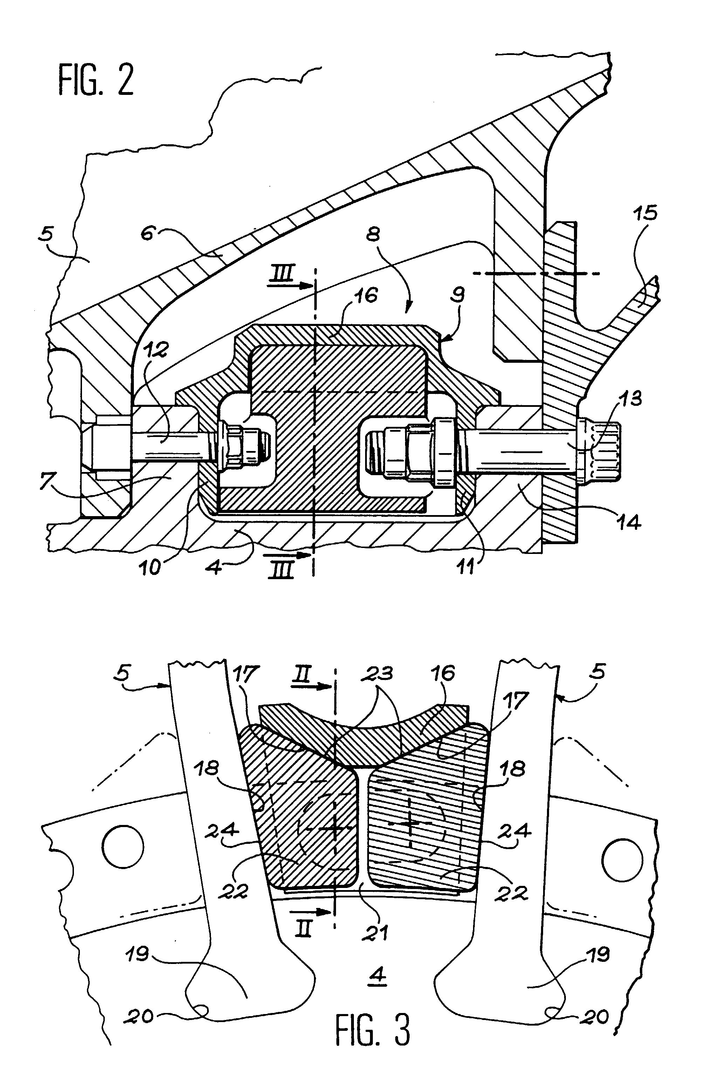

On se reporte maintenant aux figures 2 et 3. Un agencement amortisseur 8 comprend un réceptacle 9 muni de deux flancs extrêmes 10 et 11 réunis par des groupes de boulons 12 et 13 respectivement à des brides 7 de fixation des plates-formes 6 et à une bride 14 de jonction du disque 4 et une enveloppe 15 du rotor de compresseur à basse pression 3. Les flancs 11 et 12 sont réunis par une paroi extérieure 16 qui, comme on le voit bien à la figure 3, est recourbée et concave à l'extérieur, de sorte que sa face interne 17 (orientée vers le disque 4) est inclinée radialement vers l'extérieur des deux côtés, en direction des faces latérales 18 des aubes 5, ou plus précisément des faces latérales de leur échasse immédiatement adjacente au pied 19 d'aube engagé dans un brochage 20 du disque 4.

Des logements 21 s'étendent sous la face interne 17 et entre les flancs 10 et 11. Ils sont occupés chacun par une masselotte 22 qui présente une face radialement externe 23 frottant contre la face 17 et une face tangentiellement externe 24 touchant contre la face latérale 18 des échasses des aubes 5, du moins pendant le fonctionnement, quand des forces centrifuges suffisantes s'exercent pour faire saillir les masselottes 22 hors des logements 21 en glissant obliquement le long d'un côté de la face interne 17. Le reste du temps, les masselottes sont entourées par le réceptacle 9, les aubes 5 et le disque 4 et restent donc maintenues dans leur logement 21. En utilisant un seul réceptacle 9 à deux logements 21 et deux masselottes 22 pour deux aubes 5 voisines, et des logements 21 communiquant entre eux par le fond, un agencement plus simple et plus léger est obtenu.

L'agencement amortisseur 8 se prête à une foule de modifications en changeant la masse ou la forme des masselottes 22, ou l'inclinaison de la face interne 17. La reprise des efforts centrifuges par les boulons 12 et 13 qui unissent d'autres éléments tournants en sus des réceptacles 9 au disque 4 de rotor évite de compliquer le dispositif et devrait égaliser les efforts sur les brides 7 et 14.

## Revendications

1. Agencement amortisseur (8) monté entre deux aubes (5) voisines attachées à un disque (4) de rotor, comprenant un réceptacle (9) solidaire du disque (4) et muni de logements (21) s'ouvrant vers des faces latérales (18) des aubes (5), et des masselottes (22) disposées dans les logements (21), caractérisé en ce que les logements (21) sont délimités radialement vers l'extérieur par des portions (16) du réceptacle sur lesquelles les masselottes glissent sous l'effet des forces centrifuges et qui sont inclinées radialement vers l'extérieur en direction des aubes (5) vers lesquelles les logements (21) s'ouvrent.

2. Agencement amortisseur selon la revendication 1, caractérisé en ce que le réceptacle (9) est boulonné à au moins une bride (7) du disque (4) à laquelle une couronne (6) délimitant une veine (2) d'écoulement des gaz est aussi boulonnée.

3. Agencement amortisseur selon l'une quelconque des revendications 1 ou 2, caractérisé en ce que les logements (21) sont répartis par paires dans le réceptacle (9), les logements des paires s'ouvrant respectivement vers les deux aubes (5) et communiquant entre eux.

## Patentansprüche

1. Dämpfungsvorrichtung (8), die zwischen zwei benachbarten, an einer Rotorscheibe (4) angebrachten Schaufeln (5) montiert ist, bestehend aus einem Auffang (9), der mit der Scheibe (4) fest verbunden ist und mit Aufnahmen (21) versehen ist, die sich zu Seitenflächen (18) der Schaufeln (5) hin öffnen, sowie aus Fliehgewichten (22), die in den Aufnahmen (21) angeordnet sind,
**dadurch gekennzeichnet, daß** die Aufnahmen (21) radial nach außen durch Abschnitte (16) des Auffangs begrenzt sind, über die die Fliehgewichte unter der Einwirkung der Fliehkraft gleiten, und die radial nach außen in Richtung der Schaufeln (5) geneigt sind, zu denen hin sich die Aufnahmen (21) öffnen.

2. Dämpfungsvorrichtung nach Anspruch 1,
**dadurch gekennzeichnet, daß** der Auffang (9) an mindestens einen Flansch (7) der Scheibe (4) angeschraubt ist, an dem auch ein Kranz (6) angeschraubt ist, der eine Strömungsbahn (2) für Gase abgrenzt.

3. Dämpfungsvorrichtung nach einem der Ansprüche 1 oder 2,
**dadurch gekennzeichnet, daß** die Aufnahmen (21) paarweise in dem Auffang (9) verteilt sind, wobei sich die Aufnahmen (21) der Paare zu den jeweiligen zwei Schaufeln (5) hin öffnen und miteinander kommunizieren.

## Claims

1. Damping arrangement (8) mounted between two adjacent blades (5) attached to a rotor disc (4), comprising a receptacle (9) secured to the disc (4) and equipped with housings (21) opening towards lateral faces (18) of the blades (5) and flyweights (22) placed in the housings (21), characterized in that the housings (21) are delimited radially towards the outside by portions (16) of the receptacle on which portions the flyweights slide under the effect of the centrifugal forces and which are inclined radially outwards in the direction of the blades (5) towards which the housings (21) open.

2. Damping arrangement according to Claim 1, characterized in that the receptacle (9) is bolted to at least one flange (7) of the disc (4), to which flange a ring (6) delimiting a tunnel (2) for the flow of gases is also bolted.

3. Damping arrangement according to either one of Claims 1 and 2, characterized in that the housings (21) are set out in pairs in the receptacle (9), the housings of the pairs being open respectively towards the two blades (5) and communicating with each other.
